# EUROPEAN PATENT SPECIFICATION

(11) **EP 3 866 591 B1**
(45) Date of publication and mention of the grant of the patent: **26.11.2025**
(21) Application number: 19791332.0
(22) Date of filing: 15.10.2019
(51) Int. Cl.: A01M 1/04

(54) **TRAP**
FALLE
PIÈGE

(30) Priority: 18.10.2018 GB 201816993
(43) Date of publication of application: 25.08.2021
(73) Proprietor: Pelsis Limited, Grimbald Crag Close Knaresborough North Yorkshire HG5 8PJ (GB)
(72) Inventor: FISH, John, Yorkshire HG5 8PJ (GB); STELLING, Jonathon, Yorkshire HG5 8PJ (GB)
(74) Representative: Appleyard Lees IP LLP
(86) International application number: PCT/GB2019/052930
(87) International publication number: WO 2020/079415

(56) References cited:
- CN-A- 107 258 725
- CN-U- 207 162 168
- CN-U- 207 213 898
- CN-U- 207 400 241
- US-A1- 2017 006 847

## Description

### FIELD

The present invention relates to a flying pest trap system and a method of operating such a system.

### BACKGROUND

A flying pest trap typically comprises a housing containing an attracting element, such as an electrically powered light source that emits UV light (usually in addition to visible light), and an immobilisation element, such as a glueboard. The glueboard is a board carrying an adhesive that retains the pests when they make contact with the glueboard.

The flying pest trap functions by attracting flying pests, such as insects including various types of fly and moth, to the light source. When in the vicinity of the light source the pest will explore the area and come into contact with the glueboard and thereby become immobilised.

Recently, there has been a desire to replace the traditional fluorescent UV lighting tubes that act as the attracting element with LED light sources. The LED light sources advantageously consume less power, and have a longer lifetime in optimal conditions than that of traditional fluorescent UV tubes. However, in use the LED light sources generate a significant amount of heat, which is necessary to be managed, because the heat produced in the running of the LEDs significantly reduces the lifetime thereof, such that the flying pest trap must be serviced more regularly. A challenge arises in providing a cost effective and efficacious means of managing the problem of heat generated by LEDs in a flying pest trap.

Known flying pest traps are disclosed for example in the documents CN207162168U or US2017006847A1.

It is an aim of the present invention to address the above-mentioned disadvantages, and any other disadvantages that may be apparent to the skilled person from the description herein. It is a further aim of the present invention to provide an attracting element for a flying pest trap that efficiently dissipates heat.

### SUMMARY

According to the present invention there is provided an apparatus and method as set forth in the appended claims. Other features of the invention will be apparent from the dependent claims, and the description which follows.

According to a first aspect of the invention there is provided a flying pest trap system comprising an attracting element comprising a plurality of LEDs arranged on a support section, and a flying pest trap comprising a receiving section configured to detachably secure the support section of the attracting element. The receiving section has higher thermal conductivity than the support section, so as to transfer heat generated by the LEDs of the attracting element to the receiving section. The attracting element comprises electrical contacts connectable to corresponding contacts of the flying pest trap, the electrical contacts being formed at an end of the support section. The attracting elements comprises a projection for manipulation by a user to move the attracting element into connection with electrical contacts of the flying pest trap. The flying pest trap comprises securing means for securing the attracting element to the receiving section, the securing means comprising a spring clip.

At the end of life of the LEDs, the attracting element may be detached from the receiving section and may be replaced. If the heat sink were permanently attached to the attracting element, the material used as the heat sink fixed to the UV LED source would be disposed of at the end of the life of the consumable part, which is typically two to three years; when this UV LED source is replaced, the heat sink element would also be required to be replaced, to maintain the heat management properties of the device. This would incur significant additional cost to the replacement consumable part. The attracting element being detachably securable to the receiving section therefore provides the advantage of saving costs when the attracting element is replaced.

The LEDs may be spaced apart from each other. The LEDs may be at least 30 mm apart, preferably 39 mm apart. The LEDs may be disposed at regular intervals along a length of the support section.

The LEDs may be arranged on a front surface of the support section. The support section may comprise an elongate strip. The elongate strip may be formed of metal, preferably aluminium.

A rear surface of the attracting element may comprise a heat dispersing surface. The heat dispersing surface advantageously improve thermal contact between the receiving section. and the support section, thereby enhancing the transfer of heat from the attracting element to the receiving section. The heat dispersing surface may be provided by thermally conductive tape arranged on a rear surface of the support section. The heat dispersing surface may enhance the transfer of heat from the attracting element to the receiving section. The thermal tape may be deformable or compressible. This may improve the contact between the attracting element and the receiving section by inhibiting air holes from forming between the attracting element and the receiving section.

The immobilisation element may be a glue board. The immobilisation element may comprise a surface with adhesive formed thereon.

The feature of the receiving section having higher thermal conductivity than the support section provides the advantage that the receiving section may act as a heat sink.

The receiving section may comprise a plate. The plate may be an elongate plate. The plate may comprise metal, preferably aluminium.

The plate may comprise a front surface for contacting the attracting element in use. The front surface may be substantially planar. The front surface being substantially planar may improve contact between the plate and the attracting element, thereby enhancing heat transfer from the attracting element to the receiving section.

The plate may comprise a non-planar rear surface. The rear surface may comprise one or more ribs. The non-planar characteristic of the rear surface may increase the surface area of the rear surface of the plate, to improve heat dissipation from the plate into the surrounding environment.

A securing portion of the at least one spring clip may be biased towards the receiving section, such that in use the attracting element is secured between the securing portion of the at least one spring clip and the receiving section.

The flying pest trap may comprise a housing having a rear portion for attachment to a wall and a front portion opposite the rear portion. The rear portion, preferably an internal rear wall of the rear portion, may comprise the receiving section.

The rear portion may comprise at least one recess. The at least one recess may be provided adjacent the receiving section. The at least one recess may be provided in a front surface of the rear portion, adjacent the receiving section. The at least one recess may improve the access for a user to insert and remove the attracting element from the receiving section.

The rear portion may comprise a plurality of recesses. The plurality of recesses may be provided spaced apart along the length or the receiving section.

The front portion may comprise an aperture formed at a position corresponding to the position of the LEDs of the attracting element. The aperture may be an elongate slot. The front portion may be hingedly attached to the rear portion.

The flying pest trap may comprise the immobilisation element and at least one attracting element.

According to a second aspect of the invention there is a method of operating a flying pest trap system comprising:
detachably securing an attracting element comprising a plurality of LEDs arranged on a support section to a receiving section of a flying pest trap, the receiving section having higher thermal conductivity than the support section, so as to transfer heat generated by the LEDs to the receiving section. The attracting element comprises electrical contacts connectable to corresponding contacts of the flying pest trap, the electrical contacts being formed at an end of the support section. The attracting elements comprises a projection for manipulation by a user to move the attracting element into connection with electrical contacts of the flying pest trap. The flying pest trap comprises securing means for securing the attracting element to the receiving section, the securing means comprising a spring clip

The method may comprise securing an immobilisation element as defined in the second aspect to a retaining portion of the flying pest trap.

The method may comprise further steps, as defined herein.

### BRIEF DESCRIPTION OF DRAWINGS

For a better understanding of the invention, and to show how embodiments of the same may be carried into effect, reference will now be made, by way of example only, to the accompanying diagrammatic drawings in which:
Figure 1 is a front view of an exemplary flying pest trap system;
Figure 2 is a rear view of the flying pest trap of figure 1;
Figures 3A and 3B are side views of the flying pest trap of figure 1;
Figure 4 is a perspective view of the flying pest trap of figure 1, with the front portion removed;
Figure 5 is a perspective view of the flying pest trap of figure 1, with the front portion removed and the immobilisation element partially removed;
Figure 6 is a front view of the flying pest trap of figure 1, with the front portion and the immobilisation element removed;
Figure 7 is a partial perspective view of the flying pest trap of figure 1, with the immobilisation element removed;
Figure 8 is a front view of the attracting element of the flying pest trap system of figure 1
Figure 9 is a perspective view of the attracting element of figure 8;
Figure 10 is a rear view of the attracting element of figure 8;
Figure 11 is an enlarged view of part of figure 7;
Figure 12 is an isolated view of the clip of the flying pest trap system of figure 1;
Figure 13 is a perspective view of another exemplary flying pest trap system outside the scope of the claims, with the housing open and the immobilisation element removed;
Figure 14 is a front view of the flying pest trap of figure 13 with the housing closed and the immobilisation element removed;
Figure 15 is a front view of an exemplary attracting element outside the scope of the claims;
Figure 16 is a perspective view of the flying pest trap of figure 13 during installation of the attracting element of figure 15;
Figure 17 is an enlarged view of part A of figure 16;
Figure 18 is an enlarged view of part A of figure 16 after the attracting element of figure 14 has been installed;
Figure 19 is an enlarged view of part B of figure 17;
Figure 20 is a front view of an attracting element according to a further example of the invention outside the scope of the claims; and
Figure 21 is a front of a flying pest trap according to a further example of the invention outside the scope of the claims with the housing closed and the immobilisation element removed.

### DESCRIPTION OF EMBODIMENTS

In overview, examples of the invention provide a removable attracting element for a flying pest trap, wherein the attracting element comprises a plurality of LEDs disposed on a support element. The support element, which in some examples takes the form of a metal plate, is configured to be coupled to a corresponding receiving section in housing of the flying pest trap, which may also take the form of a metal surface. Accordingly, coupling between the support element and the receiving section allows the housing to act as a heat sink for the LEDs, thereby dissipating the heat generated thereby.

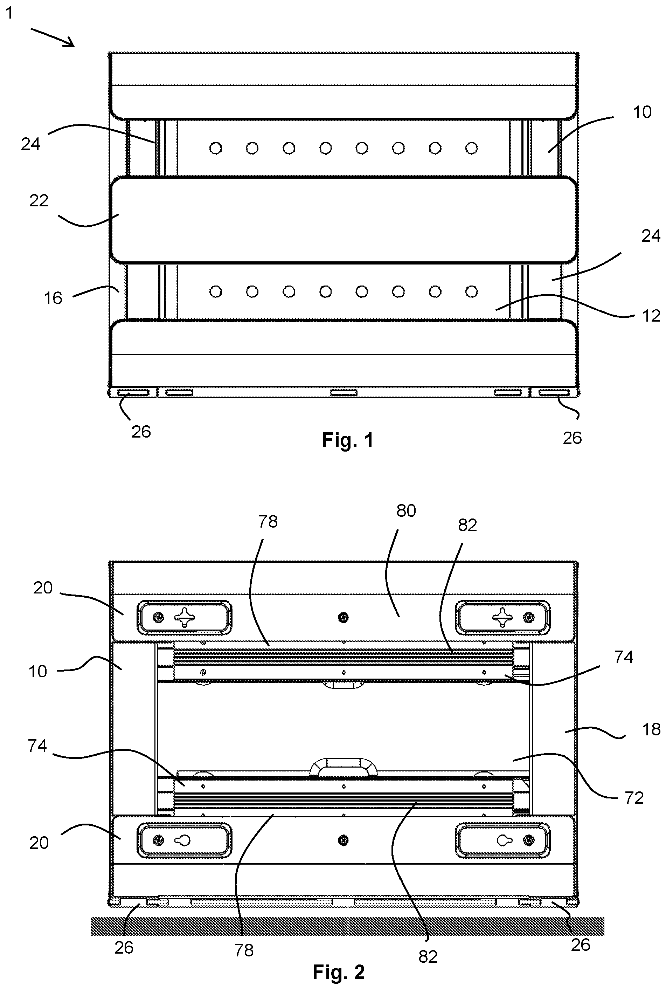

Figures 1-11 show a first example of a flying pest trap system 1 comprising a flying pest trap 10, an immobilisation element 12 and two attracting elements 14.

The flying pest trap 10 comprises a housing 16, which forms a casing or enclosure configured to support and retain the other elements of the system 1, including the immobilisation element 12 and the attracting elements 14, as discussed in more detail below.

The housing 16 comprises a rear portion 18. The rear portion 18 is configured to be secured to a wall or other surface. The rear portion 18 comprises mounting portions 20 having holes arranged to receive bolts, screws or other fixing means for securing the rear portion 18 to a wall or for mounting to a mounting bracket.

The housing 16 comprises a front portion 22. As shown in figure 1, the front portion 22 forms part of a front wall of the housing 16 and defines two apertures 24 for the egress of light from the attracting elements 14, so that flying pests may be lured to the flying pest trap system 1. Furthermore, the apertures 24 may allow the ingress of flying pests to the trap system 1, so that they may come into contact with the immobilisation element 12. The apertures 24 each take the form of horizontal elongate slots. It is known that flying pests are more attracted to horizontally orientated light sources, and therefore these horizontal elongate slots 24 convey the impression of a horizontal light source to the flying pest.

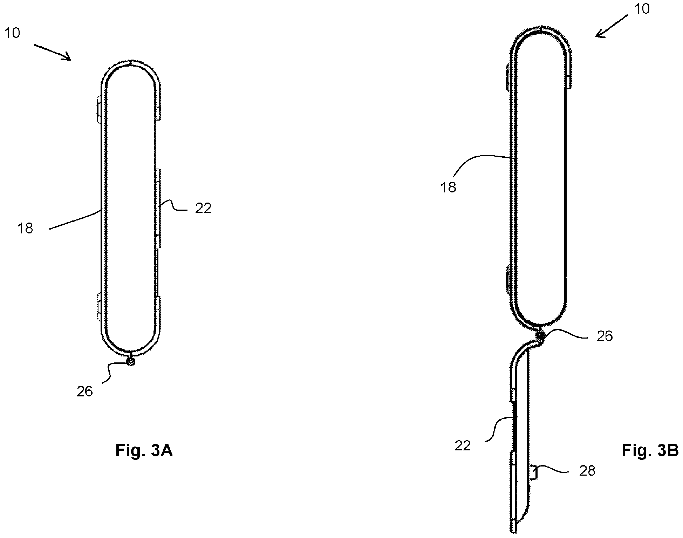

As shown in figures 3A and 3B, the front portion 22 is hingedly connected to the rear portion 18, so that the housing 16 can be opened to allow access to the interior thereof. The front portion 22 is pivotably mounted along a lowermost edge of the housing 16, so that the front portion 22 is arranged to rotate downwards and forwards in order to open. Accordingly, the housing 22 comprises hinges 26 formed on the lowermost edge of the housing 16.

The housing 16 comprises suitable retaining means for securing the front portion 22 in the closed position. The front portion 22 comprises latches 28 provided at opposing sides of the front portion 22, on an inside surface 30 of the front portion 22. The rear portion 18 comprises complementary receivers 32 for receiving the latches 28. Other retaining means may be employed, for example clips or nuts and bolts, or the hinges 26 may be friction hinges, which allow the rotation of the front portion 22 when a force is applied by a user, but are adapted so as to retain the front portion 22 in position once the user releases the front portion 112.

The immobilisation element 12 takes the form of a glue board. The glue board comprises a forward-facing surface 34 that carries an adhesive, which is configured to retain the pests when they make contact with the glue board. It will however be understood that the shape and size of the immobilisation element 12 may be varied. In some examples, the immobilisation element 12 may comprise folded or curved sections.

The immobilisation element 12 comprises a plurality of holes 36 formed in the surface thereof, which are configured to allow light emitted from the attracting elements 14 to pass through. The holes 36 are formed in rows extending horizontally across the immobilisation element 12. Each row of holes 36 is arranged to coincide with the position of a respective attracting element 14 and a respective aperture 24 in the front of the housing 16.

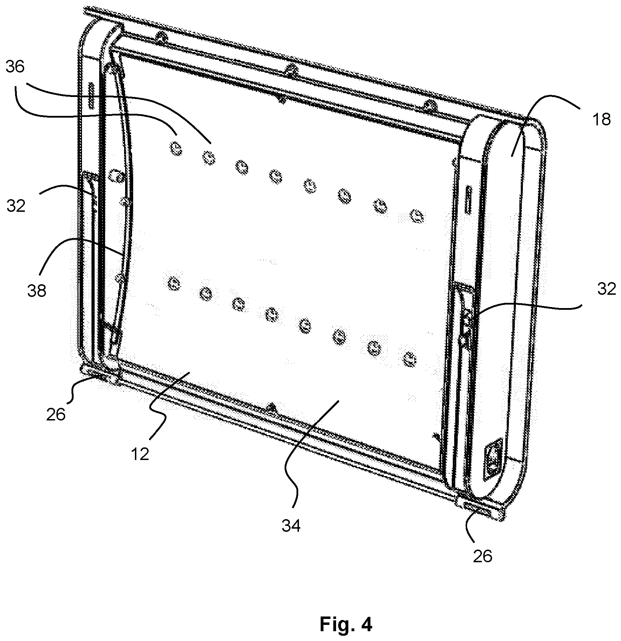

The immobilisation element 12 is detachably securable to the housing 16, so that it can be replaced when it has become saturated with flying pests. The housing 16 comprises one or more immobilisation element retaining portions 38. As shown in figures 4-7, the immobilisation element retaining portions 38 are rails provides at opposing sides of the housing, each rail being arranged to secure an edge 40 of the immobilisation element 12. In other examples, the immobilisation element retaining portions may take the form of slots or clips.

The immobilisation element 12 is positioned in front of the attracting elements 14. In other words, the immobilisation element 12 is disposed between the attracting elements 14 and the front portion 22 (and particularly the apertures 24 in the front portion). Accordingly, light emitted by the attracting elements 14 passes through the holes 36 in the immobilisation element 12 before escaping the housing 16 via apertures 24 in the front portion 22.

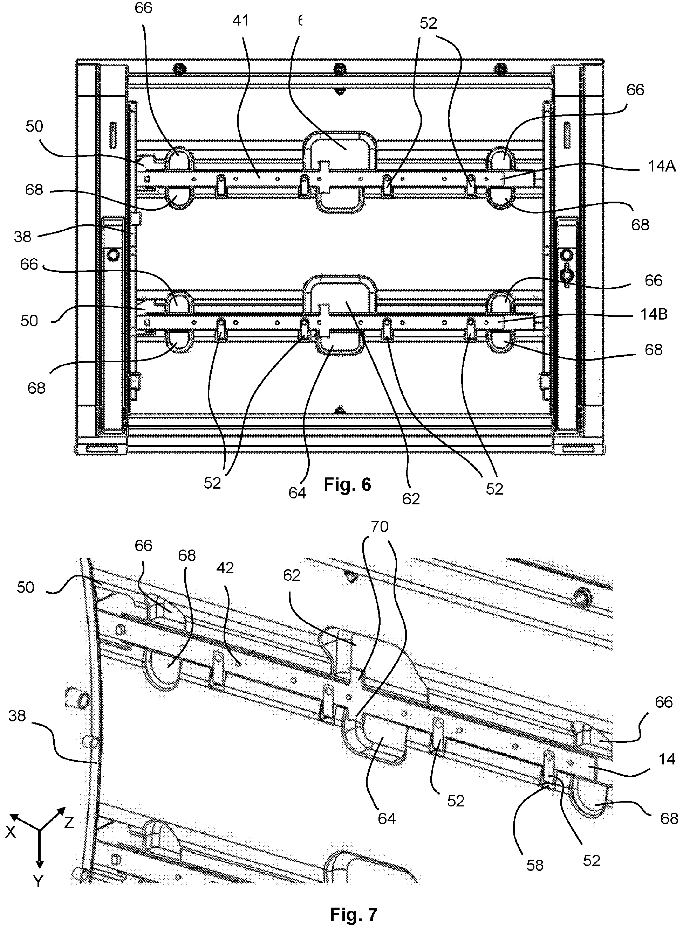

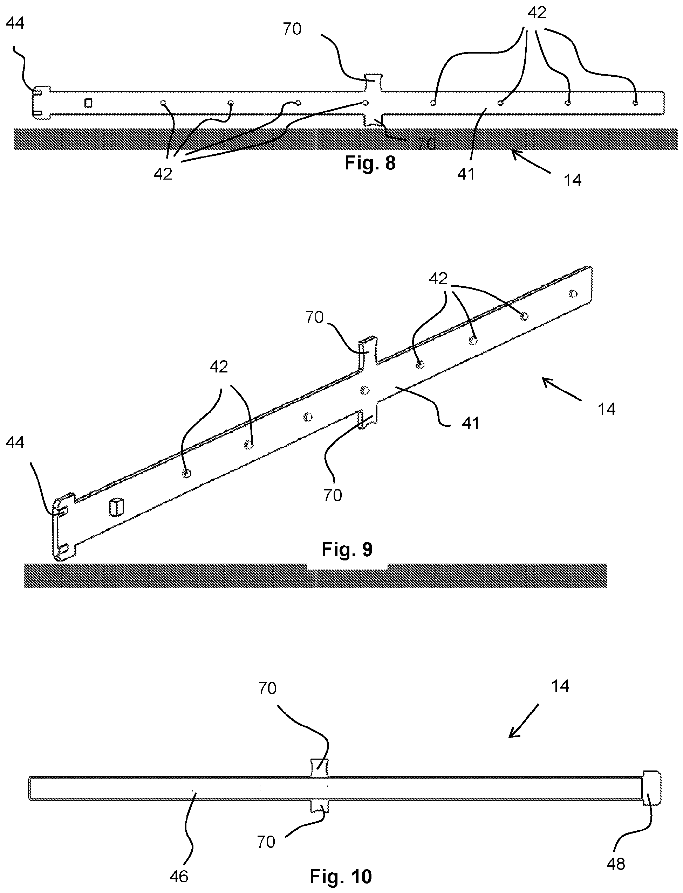

Figures 8 to 10 show the attracting elements 14 in more detail. As shown in figure 6, the flying pest trap system 1 comprises two attracting elements 14A, 14B, which are disposed at positions corresponding to the apertures 24 in the front portion 22.

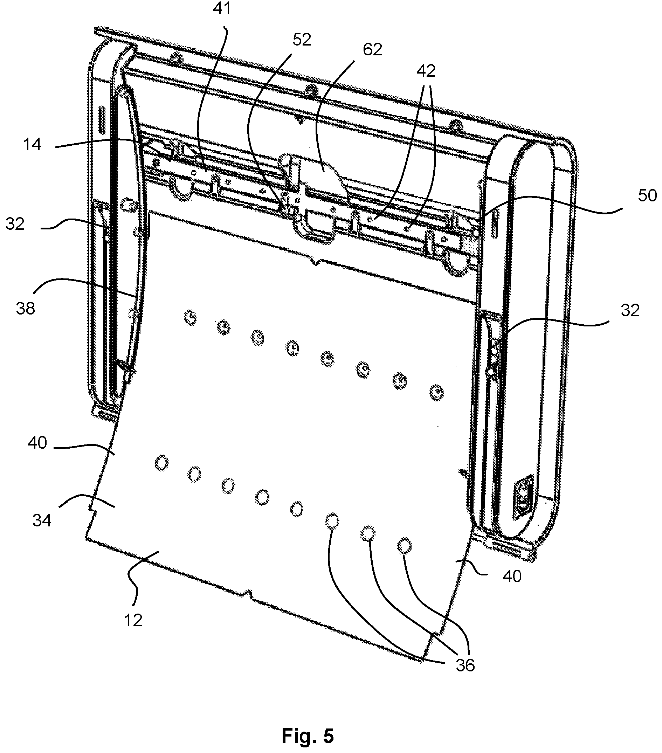

Each attracting element 14 takes the form of an elongate strip 41, formed of aluminium. The strip 41 supports a plurality of LEDs 42 attached thereto, which are configured to emit UV light. The LEDs 42 are disposed on the strip 41 at regular intervals along the longitudinal axis thereof. The LEDs 42 are disposed approximately 40 mm apart. The separation of the LEDs 42 corresponds to the separation of the holes 36 in the immobilisation element 12. The elongate strip 41 of the attracting element 14 comprises a printed circuit board (PCB) connecting the LEDs 42. The attracting element 14 shown in figures 4 and 5 comprises eight LEDs 42.

The housing comprises a power supply (not shown). The attracting element 14 comprises electrical contacts 44, disposed at an end of the elongate strip 41. The electrical contacts 44 are configured to couple to corresponding electrical contacts (not shown) provided in the housing 16, such that the attracting element 14 may receive electrical power from the housing 16. Power received at the electrical contacts 44 of the attracting element 14 is supplied to the LEDs 42 to illuminate the LEDs 42.

A heat dispersing element 46 is provided on a rear surface 48 of the attracting element 14. The heat dispersing element 46 is a thermal tape. The thermal tape provides a contact between the attracting element 14 and a receiving portion 50 of the housing. The thermal tape provides a deformable surface between the attracting element 14 and the receiving portion 50, thereby avoiding air pockets forming between the attracting element 14 and the housing 16.

Each attracting element 14 is detachably securable to the trap 10, and in particular to a receiving portion 50 of the housing 110. Accordingly, the attracting element 14 can be removed and replaced in the event of one or more of the LEDs 42 reaching the end of their life and failing.

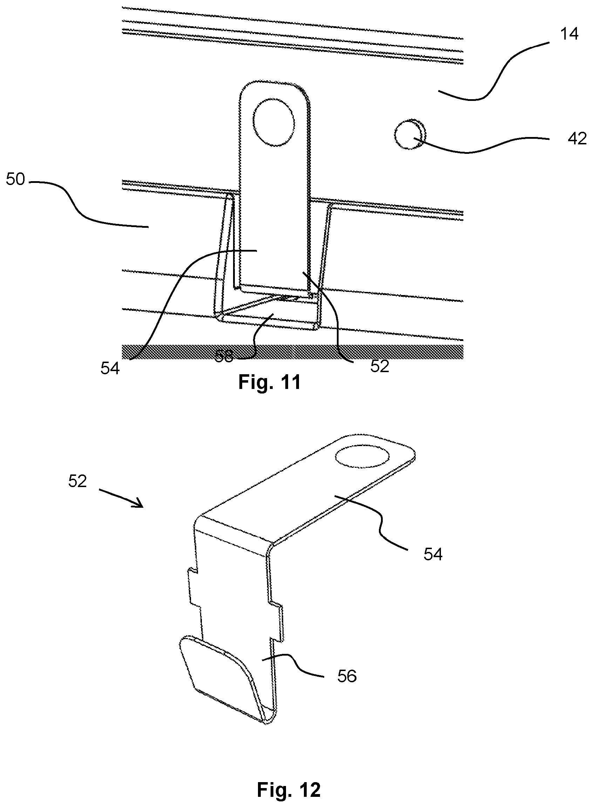

As shown in figures 6 and 7, the trap 10 comprises a plurality of securing means for detachably securing the attracting elements 14 within the trap 10. The securing means are spring clips 52, shown in more detail in figures 11 and 12.

As shown in figure 12, a spring clip 52 comprises a securing portion 54 and an insertion portion 56, the insertion portion 56 being angled relative to the securing portion 54. The spring clip 52 is resiliently deformable, the connection 58 between the securing portion 54 and the insertion portion 56 being deformable, and the securing portion 54 is biased towards the insertion portion.

The trap 10 comprises a plurality of openings 58 for receiving the spring clips 52, the plurality of openings 58 being provided in a front surface 60 the rear portion 18 of the housing 16. The insertion portion 56 of the spring clip 52 is insertable into an opening 58 in the rear portion 18 and is retainable therein. When the insertion portion 56 is inserted into the opening 58, the securing portion 54 extends upwards from the opening 58 and faces the receiving portion 50. In use, the attracting element 15 can be inserted downwards in a direction Y, between the securing portion 54 of the spring clip 52 and the receiving portion 50 of the housing. The spring clip 52 is deformed by the insertion of the attracting element 14, the angle between the securing portion 54 and the insertion portion 56. The securing portion 54 is biased in a direction Z, towards the insertion portion 56, and thereby retains the attracting element 14 between the securing portion 54 of the spring clip 52 and the receiving portion 50 of the trap 10.

As shown in figure 6, the trap 10 comprises two rows of four openings 58 for the spring clips 52, and a spring clip 52 is provided in each of the openings 58. The openings 58 and spring clips 52 are spaced apart along the width of the rear portion 18 of the housing 16, and are arranged such that in use the securing portion 54 of the spring clip 56 contacts the attracting element 14 at a position on the front surface of the attracting element 14 between two adjacent LEDs 42. The spring clips 52 thereby do not disrupt the light emitted from the LEDs 42 in use.

Recesses 62, 64 are provided in the front surface 60 of the rear portion 18 of the housing 16, substantially at the centre of front surface 60 in the width direction X shown in figure 6 and in positions in the height direction Y adjacent the receiving sections 50. The recesses 62, 64 extend from the front surface 60 of the rear portion 18 towards a back surface of the rear portion, in the Z direction. The recesses 62, 64 facilitate the insertion and removal of the attracting element into the receiving portion of the housing, because they provide spaces above and below the attracting element 14, in which a user can insert their fingers, for example, in order to grip the attracting element 14 when inserting or removing the attracting element 14.

Eight further recesses 66, 68 are provided in the rear portion of the housing, to further facilitate the insertion and removal of the attracting elements 14. Two recesses 66 are provided above each attracting element 14, on either side of the central recess 62, and two recesses 68 are provided below each attracting element 14, on either side of the central recess 64, as shown in figure 6.

As shown in figures 7-10, each attracting element 14 comprises wings 70 that project from the elongate strip 40, substantially perpendicularly to the elongate strip 40. When the attracting element 14 is inserted between the spring clips 52 and a receiving portion 50 of the trap 10, a user may push the wings 70 in the X direction, thereby moving the attracting element 14 towards a side of the trap 10. This allows the electrical contacts 44 of the attracting element 14 to couple to the electrical contacts of the trap 10. A user may also push the wings 70 in an opposite direction, to uncouple the electrical contacts 44 of the attracting element 14 from the electrical contacts of the trap 10, if a user desires to remove or replace the attracting element 14.

The wings 70 are provided substantially towards the centre of the length of the elongate strip 40, and thus when the attracting element 14 is inserted in the trap 10 and coupled to the electrical contacts of the housing 16, wings 70 are provided over the central recesses 62, 64, as shown in figures 6 and 7, such that a user may easily manipulate the wings by inserting their fingers into the recesses 62, 64 to grasp the wings.

The rear portion 18 of the housing 16 comprises a chassis 72 formed of plastics material, and two receiving sections 50. Each receiving section 50 comprises a plate 74. The plates 74 are elongate and extend along the width of the rear portion 18 of the housing 16, in positions corresponding to attracting elements 14 and the apertures 24 in the front portion. Each plate 74 is provided to the rear of an attracting element 14. The plates 74 are formed of extruded aluminium and are more thermally conductive than the material of the strip 302. The plates 74 are attached to the chassis 72 and may be removable from the chassis 72.

Each plate 74 comprises a front, planar surface that contacts the heat dispersing element 46 of the attracting element 14 when the attracting element 14 is inserted in the trap 10. A rear surface 78 of each plate 74 is exposed on a rear surface 80 of the rear portion 18 of the housing 16, as shown in figure 2. The rear surface 78 of each plate 74 comprises a plurality of ribs 82. The ribs 82 extend in the width direction of the housing 16. The ribbed rear surface 78 of the plate 74 has an increased surface area, thereby improving heat dissipation of the plate 74.

As shown in figures 3A and 3B, the mounting portions 20 project from the rear surface 80 of the rear portion 18, and so when the trap 10 is mounted to a wall, a space is provided between the rear surface 78 of each plate 74 and the wall. This allows heat to dissipate from the plates 74 into air in the space and into the surrounding environment.

In use, the front portion 22 of the housing 16 is opened, to allow access to the interior of the housing 16. A first attracting element 14 is coupled to the receiving portion 50 by sliding the attracting element 14 downwards between the securing portions 54 of the spring clips 52 and a the front surface 76 of one of the plates 74. A user can then manipulate a wing 70 of the attracting element 14 to push the attracting element 14 towards the electrical contacts of the trap 10, in order to couple the electrical contacts 44 of the attracting elements 14 to the electrical contacts of the trap 10. The spring clips 52 hold the heat dispersing surface of the attracting element 14 in contact with the plate 74, such that heat generated by the LEDs 42 in use is transferred to the plate 74 and thus can dissipate effectively. A second attracting element 14 is then inserted between the securing portions of the spring clips 52 and a second plate 74, in a similar manner to the first attracting element 14.

The immobilisation element 12 is then installed over the attracting elements 14, the holes 36 in the immobilisation element 12 aligning with the LEDs 42 of the attracting element 14. The front portion 22 of the housing 16 is then closed, with the LEDs 42 and the holes 36 in the immobilisation element 12 aligning with the apertures 24 in the front portion 22 of the housing 16. Accordingly, the light emitted from the LEDs 42 is able to directly exit the housing 16 via the holes 36 in the immobilisation element 12 and the apertures 24 in the front portion 22.

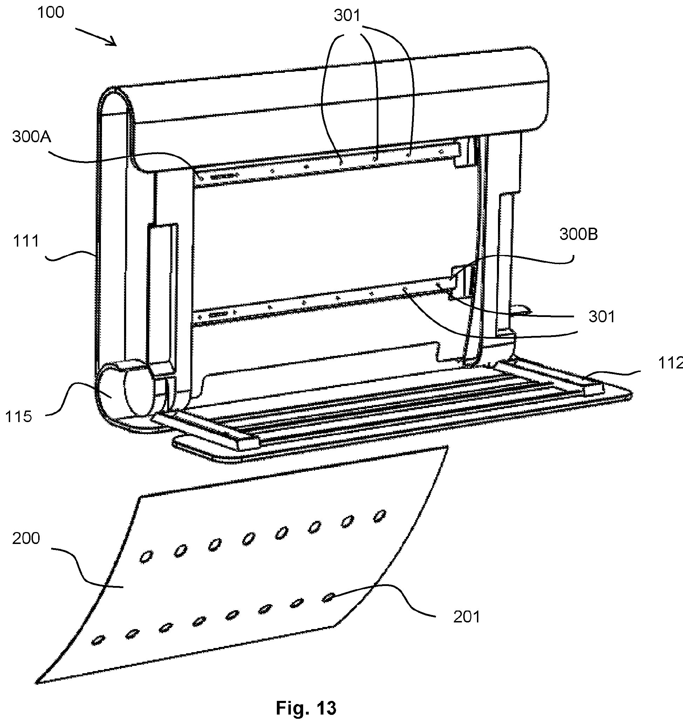

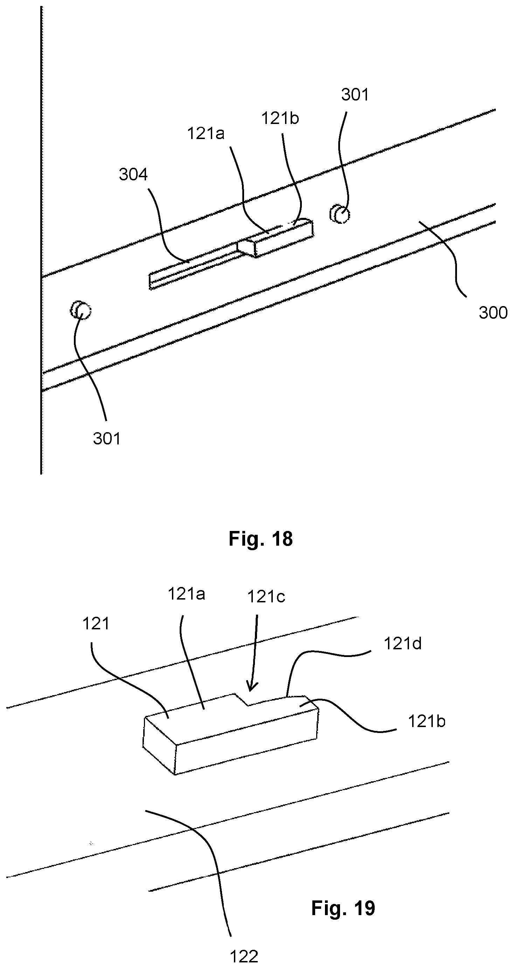

Figures 13-19 show a second example of a flying pest trap system (outside the scope of the claims) comprising a flying pest trap 100, an immobilisation element 200 and at least one attracting element 300.

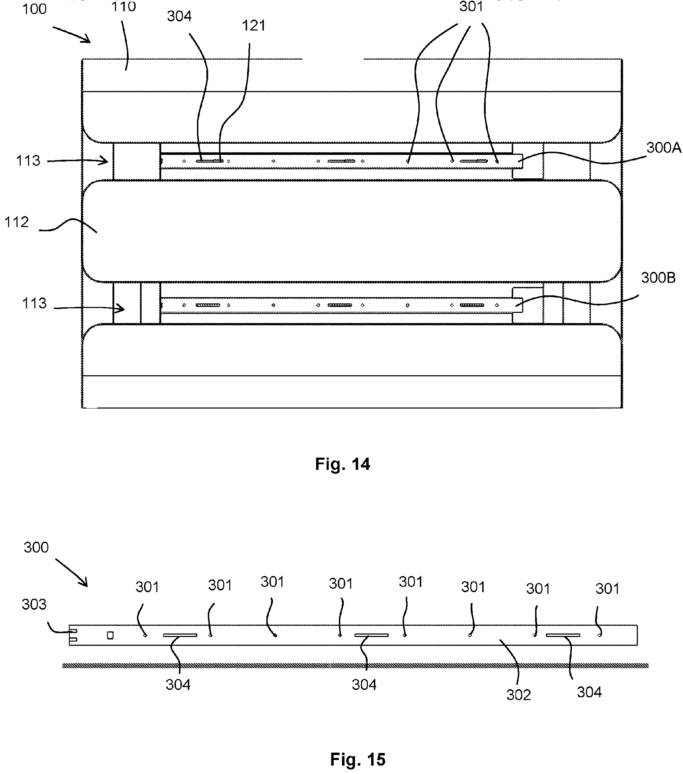

As for the first example shown in figures 1-8, the flying pest trap 100 comprises a housing 110, formed in two main parts, a first, rear portion 111 and a second, front portion 112. The rear portion 111 is configured to be secured to a wall or other surface. The front portion 112 forms at least part of a front wall of the housing 110. As shown in figure 14, the trap 100 comprises two apertures 113, which each take the form of horizontal elongate slots and which convey the impression of a horizontal light source to the flying pest. The front portion 112 is hingedly connected to the rear portion 111, so that the housing 110 can be opened to allow access to the interior thereof.

The front portion 112 is rotatably mounted along a lowermost edge of the housing 110, so that the front portion 112 is arranged to rotate downwards and forwards in order to open. Accordingly, the housing 110 comprises hinges 115 formed on opposing sidewalls of the trap 100. The housing 110 comprises suitable retaining means for securing the front portion 111 in the closed position. The hinges 115 are friction hinges, which allow the rotation of the front portion 112 when a force is applied by a user, but are adapted so as to retain the front portion 112 in position once the user releases the front portion 112.

As for the first example shown in figures 1-8, the immobilisation element 200 takes the form of a glue board. The immobilisation element 200 comprises a plurality of apertures 201 formed in the surface thereof, which are configured to allow light emitted from the attracting elements 300 to pass through. The apertures 201 are formed in rows extending horizontally across the immobilisation element 200. Each row of apertures 201 is arranged to coincide with the position of a respective attracting element 200 and a respective aperture 113 in the housing.

The immobilisation element 200 is detachably securable to the housing 100, so that it can be replaced when it has become saturated with flying pests. As shown in figure 15, the rear portion 111 of the housing 110 comprises immobilisation element retaining portions 116, arranged to retain an edge of the immobilisation element 200. The retaining portions 116 take the form of clips. The retaining portions 116 are distributed around the housing, so as to contact one or more edges of the immobilisation element 200.

The immobilisation element 200 is positioned in front of the attracting elements 300. In other words, the immobilisation element 200 is disposed between the attracting elements 300 and the front portion 112 (and particularly the apertures 113). Accordingly, light emitted by the attracting elements 300 passes through the apertures 201 in the immobilisation element 200 before escaping the housing 100 via apertures 113.

Figures 15-17 show the attracting elements 300 in more detail. The trap 100 comprises two attracting elements 300A/B, which are disposed at positions corresponding to the apertures 113. Each attracting element 300 takes the form of an elongate strip 302 comprising eight LEDs 301 configured to emit UV light. The attracting element 300 comprises electrical contacts 303, disposed at one end of the elongate strip 302 and configured to couple to corresponding contacts (not shown) in the housing 100 for supplying power to the LEDs 301. Each attracting element 300 is detachably securable to a receiving portion 120 of the housing 110. The attracting element 300 comprises a heat dispersing surface on a rear surface of the elongate strip 302.

The receiving portion 120 comprises a plate 122. The plate 122 is formed of aluminium and is more thermally conductive than the material of the strip 302.

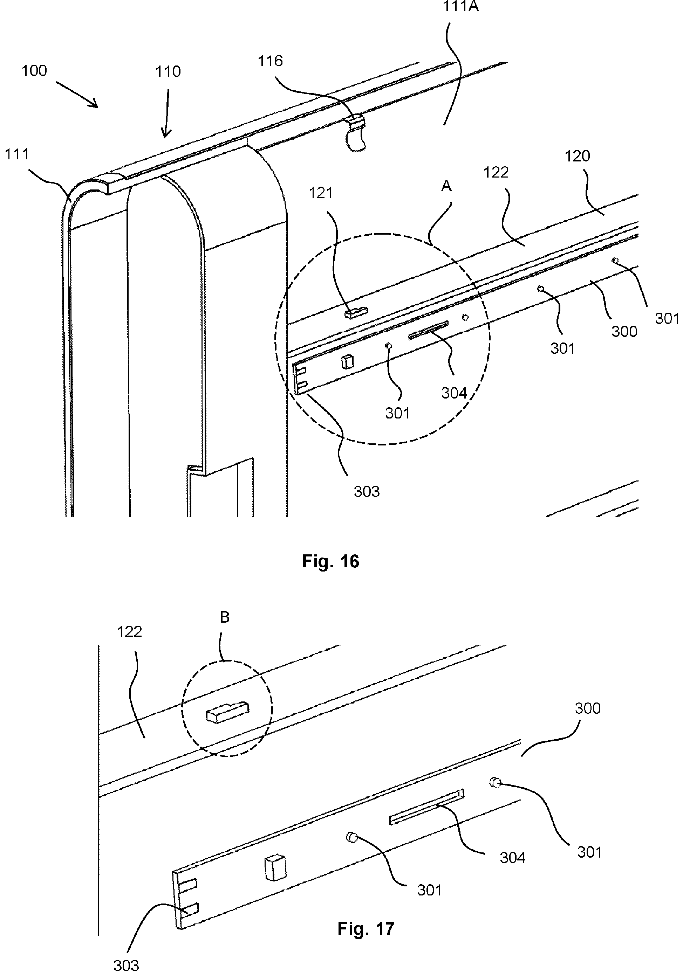

The receiving portion 120, and the means by which the attracting elements 300 are detachably secured thereto is shown in more detail in figures 16-19. As can be seen therein, the attracting elements 300 comprise a plurality of elongate slots 304, adapted to receive corresponding hooks 121 of the receiving portion 120. Each attracting element 300 comprises three slots 304, disposed along a length thereof and arranged so that the longitudinal axis of each slot 304 coincides with the longitudinal axis of the strip 302.

The hooks 121 comprise a body section 121a extending substantially horizontally from the rear wall 111a of the rear portion 111 of the housing 110. A hooking portion 121b extends from the body section 121a in a direction parallel to the plane of the receiving portion 120 and rear wall 111a. Accordingly, the hooking portion 121b, body section 121a and the plate 122 of the receiving portion 120 define a recess 121c configured to trap a portion of the attracting element 300.

A surface 121d of the hooking portion 121b that faces the plate 122 is tapered, such that the gap between the surface 121d and the plate 122 becomes progressively smaller as the surface 121d approaches the body section 121a.

In use, the attracting elements 300 are firstly installed. The housing 110 is opened, for example by rotating the front portion 112, to allow access to the interior of the housing 110. Each attracting element 300 is then coupled to its respective receiving portion 210 by firstly placing the attracting element 300 such that the hooks 121 extend through the corresponding slots 304 of the attracting element 300. The attracting element 300 is then subsequently slid sideward (particularly leftward in the examples shown in the figures), so that the strip 302 of the attracting element 300 is received in the recesses 121c. The tapered nature of the surface 121d draws the attracting element 300 into close contact with the plate 122, such that the rear surface of the attracting element 300 is tightly held again, and gently nips the strip 302 to securely hold it in position against the plate 122. Accordingly, heat generated by the LEDs in use is transferred to the plate 122, thus can be dissipated effectively.

Subsequently, the immobilisation element 200 is installed over the attracting elements 300. In particular, the immobilisation element 200 is positioned such that each of the apertures 201 therein correspond in location to a respective LED 301, and secured in position with the retaining portions 116. The housing 110 is then closed. Once the housing 110 is closed, the LEDs 301, and hence the apertures 201 in the immobilisation element 200 are disposed at a position corresponding to the apertures 113 in the housing 110. Accordingly, the light emitted from the LEDs 301 is able to directly exit the housing 110 via apertures 201 and apertures 113.

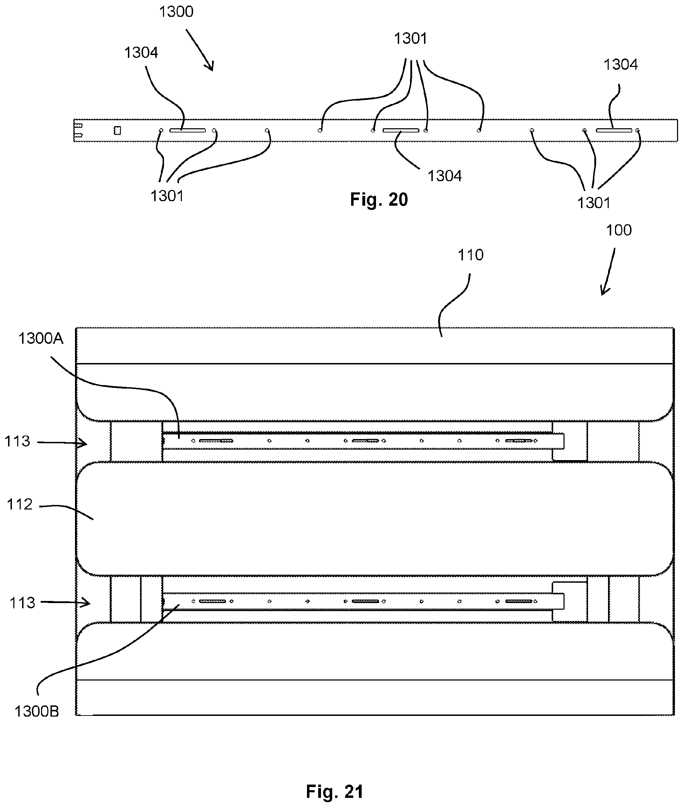

Figure 20 shows an attracting element 1300 in accordance with a further example of the invention outside the scope of the claims. The attracting element 1300 is substantially the same as attracting element 300 described hereinabove. However, attracting element 1300 comprises ten, rather than eight apertures 201. Although not shown, it will be appreciated that the attracting element 1300 is used with an immobilisation element 200 comprising a corresponding number of apertures. Figure 21 shows a pair of attracting elements 1300A/B outside the scope of the claims installed in trap 100.

Various modifications and alterations may be carried out within the scope of the invention. For example, the number of LEDs on each attracting element may be varied. The number of slots on each attracting element 300 may be varied. The shape of the attracting member may be varied, and need not be an elongate strip. The flying pest trap system may comprise a single attracting member, or more than two attracting members.

The above-described traps, immobilisation elements and attracting elements provide an arrangement that advantageously conducts the heat generated by the LEDs away from the attracting elements, thereby dissipating the heat and increasing the lifetime of the attracting elements. Advantageously, the LEDs are spaced apart, thereby also assisting in dissipating the heat.

Furthermore, the positioning of the attracting elements behind the immobilisation element allows the attracting elements to be coupled directly to the housing along a large part or the entirety of their rear surface, maximising the heat transfer. In addition, the apertures in the immobilisation elements advantageously ensure that the attracting light emitted by the attracting elements is emitted in an uninterrupted manner from the traps, so that the traps are efficacious. The attracting element being detachably securable to the receiving section advantageously saves costs when the attracting element is replaced, because the receiving section is not required to also be replaced.

## Claims

1. A flying pest trap system (1) comprising:
an attracting element (14) comprising a plurality of LEDs (42) arranged on a support section (41), and
a flying pest trap (10) comprising a receiving section (50) configured to detachably secure the support section of the attracting element;
wherein the receiving section has higher thermal conductivity than the support section, so as to transfer heat generated by the LEDs of the attracting element to the receiving section,
wherein the attracting element comprises electrical contacts (44) connectable to corresponding contacts of the flying pest trap, the electrical contacts being formed at an end of the support section,
wherein the attracting elements comprises a projection for manipulation by a user to move the attracting element into connection with electrical contacts of the flying pest trap, and
wherein the flying pest trap comprises securing means for securing the attracting element to the receiving section, the securing means comprising a spring clip (52).

2. The flying pest trap system according to claim 1, wherein the plurality of LEDs are arranged on a front surface (60) of the support section, in a spaced-apart arrangement.

3. The attracting element according to claim 1 or claim 2, wherein a heat dispersing surface (46) is provided on a rear surface (48) of the support section.

4. The attracting element according to claim 3, wherein the heat dispersing surface is provided by a thermal tape, the thermal tape being compressible or deformable.

5. The flying pest trap system according to any of the preceding claims, wherein the receiving section comprises a plate (74) having a planar front surface for contacting the attracting element in use and a non-planar rear surface.

6. The flying pest trap system according to claim 5, wherein the rear surface may comprise one or more ribs (82).

7. The flying pest trap system according to any of the preceding claims, comprising a housing (16) having a rear portion (18) for attachment to a wall and a front portion (22) opposite the rear portion, wherein the rear portion comprises the receiving section and comprises at least one recess provided adjacent the receiving section.

8. The flying pest trap system according to claim 7, wherein the front portion comprises an aperture (24) formed at a position corresponding to the position of LEDs of the attracting element, wherein the aperture is an elongate slot.

9. A method of operating a flying pest trap system (1) comprising:
detachably securing an attracting element (14) comprising a plurality of LEDs (42) arranged on a support section (41) to a receiving section (50) of a flying pest trap (10), the receiving section having higher thermal conductivity than the support section, so as to transfer heat generated by the LEDs to receiving section,
wherein the attracting element comprises electrical contacts connectable to corresponding contacts of the flying pest trap, the electrical contacts (44) being formed at an end of the support section,
wherein the attracting elements comprises a projection for manipulation by a user to move the attracting element into connection with electrical contacts of the flying pest trap, and
wherein the flying pest trap comprises securing means for securing the attracting element to the receiving section, the securing means comprising a spring clip (52).

## Patentansprüche

1. Fallensystem (1) für fliegendes Ungeziefer, Folgendes umfassend:
ein Anziehungselement (14), das mehrere LEDs (42) umfasst, die an einem Trägerabschnitt (41) angeordnet sind, und
eine Falle (10) für fliegendes Ungeziefer, einen Aufnahmeabschnitt (50) umfassend, der dazu ausgelegt ist, den Trägerabschnitt des Anziehungselements lösbar zu befestigen;
wobei der Aufnahmeabschnitt ein höheres Wärmeleitvermögen als der Trägerabschnitt aufweist, so dass Wärme, die durch die LEDs des Anziehungselements erzeugt wird, auf den Aufnahmeabschnitt übertragen wird, wobei das Anziehungselement elektrische Kontakte (44) umfasst, die mit entsprechenden Kontakten der Falle für fliegendes Ungeziefer verbunden werden können, wobei die elektrischen Kontakte an einem Ende des Trägerabschnitts gebildet sind,
wobei die Anziehungselemente eine Auskragung zur Handhabung durch einen Benutzer umfassen, um das Anziehungselement in Verbindung mit elektrischen Kontakten der Falle für fliegendes Ungeziefer zu bewegen, und
wobei die Falle für fliegendes Ungeziefer Befestigungsmittel zum Befestigen des Anziehungselements an dem Aufnahmeabschnitt umfasst, wobei die Befestigungsmittel eine Federklemme (52) umfassen.

2. Fallensystem für fliegendes Ungeziefer nach Anspruch 1, wobei die mehreren LEDs in einer beabstandeten Anordnung an einer Vorderseite (60) des Trägerabschnitts angeordnet sind.

3. Fallensystem für fliegendes Ungeziefer nach Anspruch 1 oder Anspruch 2, wobei an einer Rückseite (48) des Trägerabschnitts eine Wärmeverteilungsfläche (46) bereitgestellt ist.

4. Fallensystem für fliegendes Ungeziefer nach Anspruch 3, wobei die Wärmeverteilungsfläche durch ein thermisches Band bereitgestellt ist, wobei das thermische Band komprimierbar oder verformbar ist.

5. Fallensystem für fliegendes Ungeziefer nach einem der vorhergehenden Ansprüche, wobei der Aufnahmeabschnitt eine Platte (74) umfasst, die eine ebene Vorderseite für den Kontakt mit dem Anziehungselement während des Gebrauchs und eine nicht ebene Rückseite aufweist.

6. Fallensystem für fliegendes Ungeziefer nach Anspruch 5, wobei die Rückseite eine oder mehrerer Rippen (82) umfassen kann.

7. Fallensystem für fliegendes Ungeziefer nach einem der vorhergehenden Ansprüche, ein Gehäuse (16) mit einem hinteren Teilabschnitt (18) zum Anbringen an einer Wand und einem vorderen Teilabschnitt (22) gegenüber dem hinteren Teilabschnitt umfassend, wobei der hintere Teilabschnitt den Aufnahmeabschnitt umfasst und mindestens eine Vertiefung umfasst, die angrenzend an den Aufnahmeabschnitt bereitgestellt ist.

8. Fallensystem für fliegendes Ungeziefer nach Anspruch 7, wobei der vordere Teilabschnitt eine Öffnung (24) umfasst, die an einer Position gebildet ist, die der Position der LEDs des Anziehungselements entspricht, wobei die Öffnung ein länglicher Schlitz ist.

9. Verfahren zum Betreiben eines Fallensystems (1) für fliegendes Ungeziefer, Folgendes umfassend:
lösbares Befestigen eines Anziehungselements (14), das mehrere LEDs (42) umfasst, die an einem Trägerabschnitt (41) angeordnet sind, an einem Aufnahmeabschnitt (50) einer Falle (10) für fliegendes Ungeziefer, wobei der Aufnahmeabschnitt ein höheres Wärmeleitvermögen als der Trägerabschnitt aufweist, so dass Wärme, die durch die LEDs erzeugt wird, auf den Aufnahmeabschnitt übertragen wird,
wobei das Anziehungselement elektrische Kontakte umfasst, die mit entsprechenden Kontakten der Falle für fliegendes Ungeziefer verbunden werden können, wobei die elektrischen Kontakte (44) an einem Ende des Trägerabschnitts gebildet sind,
wobei die Anziehungselemente eine Auskragung zur Handhabung durch einen Benutzer umfassen, um das Anziehungselement in Verbindung mit elektrischen Kontakten der Falle für fliegendes Ungeziefer zu bewegen, und
wobei die Falle für fliegendes Ungeziefer Befestigungsmittel zum Befestigen des Anziehungselements an dem Aufnahmeabschnitt umfasst, wobei die Befestigungsmittel eine Federklemme (52) umfassen.

## Revendications

1. Système de piège pour parasites volants (1), comprenant :
un élément attractif (14) comprenant une pluralité de DELs (42) agencées sur une section de support (41), et
un piège pour parasites volants (10) comprenant une section de réception (50) configurée pour fixer de façon amovible la section de support de l'élément attractif ;
dans lequel la section de réception a une conductivité thermique plus élevée que celle de la section de support, afin de transférer de la chaleur générée par les DELs de l'élément attractif à la section de réception,
dans lequel l'élément attractif comprend des contacts électriques (44) connectables à des contacts correspondants du piège pour parasites volants, les contacts électriques étant formés à une extrémité de la section de support,
dans lequel l'élément attractif comprend une saillie pour manipulation par un utilisateur afin de déplacer l'élément attractif en connexion avec des contacts électriques du piège pour parasites volants, et
dans lequel le piège pour parasites volants comprend des moyens de fixation destinés à fixer l'élément attractif à la section de réception, les moyens de fixation comprenant une agrafe à ressort (52).

2. Système de piège pour parasites volants selon la revendication 1, dans lequel la pluralité de DELs sont agencées sur une surface avant (60) de la section de support, en un agencement mutuellement espacé.

3. Élément attractif selon la revendication 1 ou la revendication 2, dans lequel une surface de dispersion de chaleur (46) est prévue sur une surface arrière (48) de la section de support.

4. Élément attractif selon la revendication 3, dans lequel la surface de dispersion de chaleur est fournie par une bande thermique, la bande thermique étant compressible ou déformable.

5. Système de piège pour parasites volants selon de quelconques des revendications précédentes, dans lequel la section de réception comprend une plaque (74) ayant une surface avant plane destinée à entrer en contact avec l'élément attractif durant l'utilisation et une surface arrière non plane.

6. Système de piège pour parasites volants selon la revendication 5, dans lequel la surface arrière peut comprendre une ou plusieurs nervures (82).

7. Système de piège pour parasites volants selon de quelconques des revendications précédentes, comprenant un boîtier (16) ayant une partie arrière (18) pour assujettissement à une paroi et une partie avant (22) opposée à la partie arrière, dans lequel la partie arrière comprend la section de réception et comprend au moins un évidement prévu de façon adjacente à la section de réception.

8. Système de piège pour parasites volants selon la revendication 7, dans lequel la partie avant comprend une ouverture (24) formée à une position correspondant à la position de DELs de l'élément attractif, dans lequel l'ouverture est une fente oblongue.

9. Procédé d'exploitation d'un système de piège pour parasites volants (1), comprenant :
la fixation détachable d'un élément attractif (14) comprenant une pluralité de DELs (42) agencées sur une section de support (41) à une section de réception (50) d'un piège pour parasites volants (10), la section de réception ayant une conductivité thermique plus élevée que celle de la section de support, afin de transférer de la chaleur générée par les DELs à la section de réception,
dans lequel l'élément attractif comprend des contacts électriques connectables à des contacts correspondants du piège pour parasites volants, les contacts électriques (44) étant formés à une extrémité de la section de support,
dans lequel l'élément attractif comprend une saillie pour manipulation par un utilisateur afin de déplacer l'élément attractif en connexion avec des contacts électriques du piège pour parasites volants, et
dans lequel le piège pour parasites volants comprend des moyens de fixation destinés à fixer l'élément attractif à la section de réception, les moyens de fixation comprenant une agrafe à ressort (52).
